(19) Europäisches Patentamt
European Patent Office
Office européen des brevets

(11) Publication number: **0 097 890**
**A2**

# (12) EUROPEAN PATENT APPLICATION

(21) Application number: 83105941.5

(22) Date of filing: 16.06.83

(51) Int. Cl.³: C 08 G 63/38
C 08 G 63/18

(30) Priority: 29.06.82 JP 112424/82
01.07.82 JP 114497/82
24.11.82 JP 205621/82
25.11.82 JP 206795/82

(43) Date of publication of application: 11.01.84 Bulletin 84/2

(84) Designated Contracting States: DE FR GB NL

(71) Applicant: MITSUBISHI CHEMICAL INDUSTRIES LIMITED
5-2, Marunouchi 2-chome Chiyoda-ku
Tokyo 100(JP)

(72) Inventor: Seiichi, Nozawa
9-12, Tsukimino 8-chome Yamato-shi
Kanagawa-ken(JP)

(72) Inventor: Takashi, Oikawa
5-1, Tsutsujigaoka Midori-ku
Yokohama-shi Kanagawa-ken(JP)

(72) Inventor: Toru, Yoshii
5-1, Tsutsujigaoka Midori-ku
Yokohama-shi Kanagawa-ken(JP)

(74) Representative: Wächtershäuser, Günter, Dr.
Tal 29
D-8000 München 2(DE)

## (54) Process for producing an aromatic polyester.

(57) In a process for producing an aromatic polyester by an interfacial polycondensation reaction in which an aqueous alkaline solution containing a bisphenol represented by the general formula

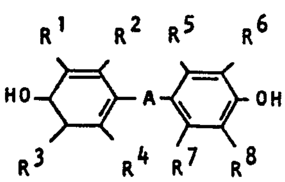

(I)

and phenolphthalein in a molar ratio of the former to the latter of from 10 : 90 to 97 : 3, is catalytically reacted with an organic solvent solution of isophthalic acid dichloride and/or terephthalic acid dichloride, an improvement wherein at least one compound selected from the group consisting of the following (a), (b), (c), (d) and (e) is used as the catalyst:

(a) a compound represented by the general formula

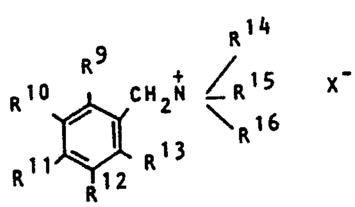

(II)

(b) a compound represented by the general formula

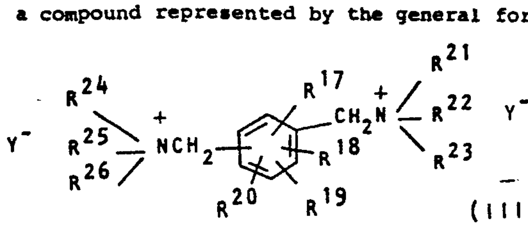

(III)

./...

EP 0 097 890 A2

(c) a compound represented by the general formula

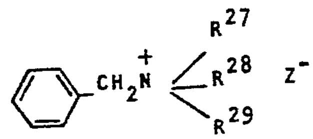 (IV) .

(d) a compound represented by the general formula

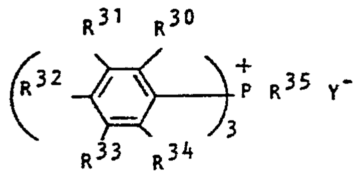 (V) and

(e) a compound represented by the general formula

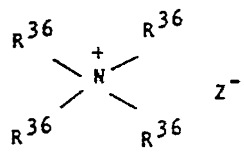 . (VI)

PROCESS FOR PRODUCING AN AROMATIC POLYESTER

The present invention relates to a process for producing an aromatic polyester.

It has been well known for long to produce an aromatic polyester by interfacial polymerization by mixing an organic solvent solution of a mixture of terephthalic acid dichloride and isophthalic acid dichloride with an aqueous alkaline solution of bisphenol A. However, the product thereby obtained is not necessarily satisfactory in its heat resistance.

On the other hand, a polyether sulfone produced by reacting an alkali metal salt of bisphenol S (4,4'-dihydroxy diphenylsulfone) with 4,4'-dichlorodiphenylsulfone, has excellent heat resistance, but the cost is high.

As a result of extensive researches to overcome the above difficulties, the present inventors have found a process whereby an aromatic polyester having a high degree of polymerization can industrially advantageously be produced.

Namely, the present invention provides a process for producing an aromatic polyester by an interfacial polycondensation reaction in which an aqueous alkaline solution containing a bisphenol represented by the general formula

BAD ORIGINAL

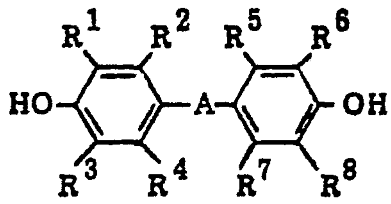

(I)

where A is an oxygen atom, a sulfur atom, a sulfonyl group, a carbonyl group, an alkylene group or an alkylidene group, and each of $R^1$, $R^2$, $R^3$, $R^4$, $R^5$, $R^6$, $R^7$ and $R^8$ is a hydrogen atom, a halogen atom or a hydrocarbon group, and phenolphthalein in a molar ratio of the former to the latter of from 10 : 90 to 97 : 3, is catalytically reacted with an organic solvent solution of isophthalic acid dichloride and/or terephthalic acid dichloride, wherein at least one compound selected from the group consisting of the following (a), (b), (c), (d), and (e), is used as the catalyst:

(a) a compound represented by the general formula

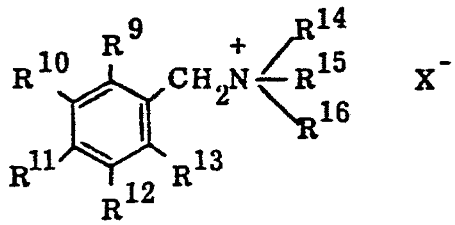

(II)

where each of $R^9$, $R^{10}$, $R^{11}$, $R^{12}$ and $R^{13}$ is a hydrogen atom or an alkyl group, at least one of $R^9$, $R^{10}$, $R^{11}$, $R^{12}$ and $R^{13}$ is an alkyl group, each of $R^{14}$, $R^{15}$ and $R^{16}$ is an alkyl group having at most 12 carbon atoms, and X is a hydroxyl group or an halogen atom,

(b) a compound represented by the general formula

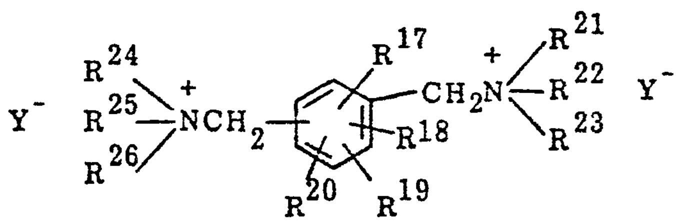 (III)

where each of $R^{17}$, $R^{18}$, $R^{19}$ and $R^{20}$ is a hydrogen atom or an alkyl group, each of $R^{21}$, $R^{22}$, $R^{23}$, $R^{24}$, $R^{25}$ and $R^{26}$ is an alkyl group, and Y is a hydroxyl group or a halogen atom,

(c) a compound represented by the general formula

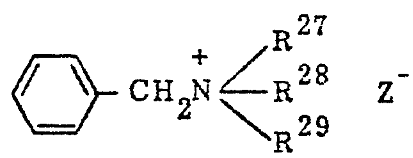 (IV)

where $R^{27}$ is an alkyl group having from 3 to 12 carbon atoms, each of $R^{28}$ and $R^{29}$ is an alkyl group having from 1 to 12 carbon atoms, provided the total number of carbon atoms of $R^{27}$, $R^{28}$ and $R^{29}$ is from 7 to 36, and Z is a hydroxyl group or a halogen atom.

(d) a compound represented by the general formula

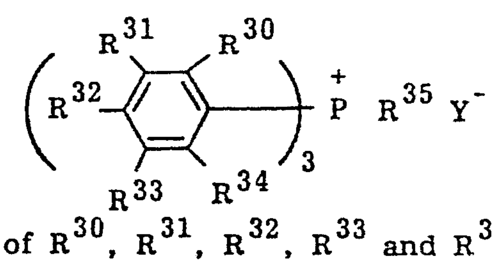 (V)

where each of $R^{30}$, $R^{31}$, $R^{32}$, $R^{33}$ and $R^{34}$ is a hydrogen atom or an alkyl group, $R^{35}$ is an alkyl group, an aryl group or an aralkyl group, and Y is a halogen atom or a hydroxyl group, and

(e) a compound represented by the general formula

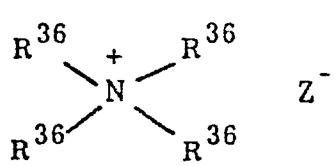 (VI)

BAD ORIGINAL

wherein $R^{36}$ is an alkyl group having from 3 to 8 carbon atoms, and Z is a hydroxyl group or a halogen atom.

Now, present invention will be described in detail with reference to the preferred embodiments.

The bisphenol to be used in the process of the present invention is represented by the above-mentioned general formula I. In the general formula, A is preferably an alkylene group or an alkylidene group. As specific examples of the bisphenol, there may be mentioned 2,2-bis(4-hydroxyphenyl)propane, 2,2'-bis(4-hydroxy-3,5-dimethylphenyl)propane, 2,2'-bis(4-hydroxy-3,5-dichlorophenyl)-propane, 2,2-bis(4-hydroxy-3-methylphenyl)propane, 2,2-bis(4-hydroxy-3-chlorophenyl)-propane, bis(4-hydroxyphenyl)-methane, bis(4-hydroxy-3,5-dimethylphenyl)-methane, bis(4-hydroxy-3,5-dichlorophenyl)-methane, bis(4-hydroxy-3,5-dibromophenyl)-methane, 1,1-bis(4-hydroxyphenyl)cyclohexane, 4,4'-dihydroxydiphenyl-bis(hydroxyphenyl)-ketone, bis(4-hydroxy-3,5-dimethylphenyl)-ketone, bis(4-hydroxy-3,5-dichlorophenyl)-ketone, bis(4-hydroxyphenyl)sulfide, bis(4-hydroxy-3-chlorophenyl)-sulfide, bis(4-hydroxy-3,5-dichlorophenyl)-sulfide, bis(4-hydroxyphenyl)-sulfone, and bis(4-hydroxy-3,5-dichlorophenyl)ether. These bisphenols may be used alone or in combination as a mixture. However, in view of the cost, 2,2-bis(4-hydroxyphenyl)propane is most preferred.

The aqueous alkaline solution of a mixture of the bisphenol and phenolphthalein is preferably prepared either by firstly dissolving the bisphenol in an aqueous alkaline solution and then adding and dissolving phenolphthalein, or by separately preparing an aqueous alkaline solution of phenolphthalein and an aqueous alkaline solution

of the bisphenol and then mixing the solutions. At that time, it is preferred to prepare the aqueous alkaline solution by using an alkali in an amount of at least twice, preferably from 2 to 2.5 times the total amount of the bisphenol and phenolphthalein by molar ratio. If phenolphthalein is firstly dissolved in an aqueous alkaline solution and then the bisphenol is dissolved therein, it is more likely that the heat distorsion temperature decreases and gelation takes place during the reaction or during the washing operation, as compared with the above-mentioned methods. This may be attributable to the fact that when firstly the bisphenol is dissolved in an aqueous alkaline solution and then phenolphthalein is dissolved therein, the phenolphthalein will take a form as shown by the following formula VII, whereas if phenolphthalein is dissolved prior to the bisphenol, it will take a form as shown by the following formula VIII. The phenolphthalein in the form of VIII is more hydrophilic than that in the form of VII, and accordingly its reactivity with the acid chloride in the organic solvent solution is poor and it tends to be hardly taken in the polymer, thus leading to a decrease of the heat distorsion temperature. Further, the phenolphthalein in the form of VIII is trifunctional, and when reacted with the acid chloride, it forms a polymer having a branched structure, whereby a gel is likely to be formed during the polymerization or washing.

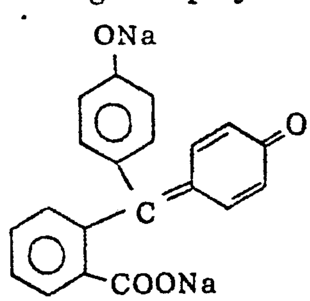

(VII)

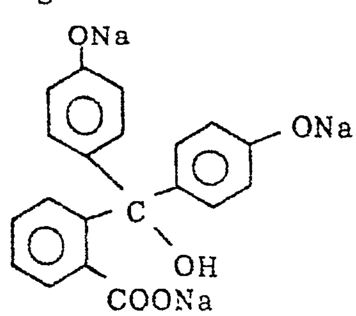

(VIII)

BAD ORIGINAL

As an alkali, NaOH, KOH, LiOH, $K_2CO_3$, $Na_2CO_3$ or the like is used in an amount of from 2 to 2.5 times the total amount of the bisphenol and phenolphthalein by molar ratio. If the amount is less than 2 times by molar ratio, the bisphenol and phenolphthalein tend to remain partially undissolved. On the other hand, if the amount exceeds 2.5 times by molar ratio, the phenolphthalein in the form of VIII tends to increase, such being undesirable. When the respective alkaline solutions are separately prepared and then mixed, the alkali is added in an adequate amount to dissolve the bisphenol and phenolphthalein, respectively, so that the total amount falls within the above-mentioned range.

The molar ratio of the bisphenol to phenolphthalein is optionally selected within the range of from 10 : 90 to 97 : 3. If the bisphenol is less than this range, the melt-molding tends to be difficult, such being undesirable. From the viewpoint of the cost, it is particularly preferred that the molar ratio is within a range of from 50 : 50 to 95 : 5.

As the acid chloride component, isophthalic acid dichloride, terephthalic acid dichloride or a mixture thereof may be used. It is preferred to use isophthalic acid dichloride alone or a mixture of the two wherein the amount of terephthalic acid dichloride is not more than 50 molar %. As the organic solvent to dissolve isophthalic acid dichloride and/or terephthalic acid dichloride, a solvent which is incompatible with water is used. Specifically, a halogenated hydrocarbon such as methylenechloride, ethylenedichloride or chloroform, toluene or benzene may be used. It is preferably a solvent for the formed polyester, and methylenechloride, 1,2-dichloroethane, 1,1,2-trichloroethane or 1,1,2,2-tetrachloroethane is preferably used.

The acid chloride concentration in the solution may vary depending upon the reaction condition or the solubility in the organic solvent, but is usually from 2 to 30% by weight. Further, the acid chloride is likely to undergo hydrolysis in the presence of water, and accordingly, it is desirable to minimize the presence of water in the organic solvent. In a case where terephthalic acid dichloride is used in combination with isophthalic acid dichloride, they may be added as a mixture, or they may be added separately, i.e. one acid chloride is added first and the other acid chloride is added subsequently.

The interfacial polycondensation reaction takes place by the contact of the above-mentioned organic solvent solution of the acid chloride with the aqueous alkaline solution comprising the bisphenol and phenolphthalein, prepared in the above-mentioned manner. Such contact may be conducted by adding the aqueous alkaline solution comprising the bisphenol and phenolphthalein to the acid chloride solution or vice versa, or by supplying both solutions simultaneously. However, it is preferred that firstly the organic solvent solution of isophthalic acid dichloride and/or terephthalic acid dichloride is added to an aqueous alkaline solution of phenolphthalein and then an aqueous alkaline solution of the bisphenol is added thereto, or the organic solvent solution of isophthalic acid dichloride and/or terephthalic acid dichloride and an aqueous alkaline solution of the bisphenol are simultaneously added to an aqueous alkaline solution of phenolphthalein. In this case, the time for the addition of the organic solvent solution of isophthalic acid dichloride and/or terephthalic acid dichloride, or the aqueous alkaline solution of the bisphenol, is preferably from 5 seconds to 4 hours. The interval from the addition of the acid chloride to the addition of the bisphenol should preferably be not

BAD ORIGINAL

longer than 2 hours, more preferably not more than 30 minutes.

By such a process, the heat distorsion temperature can be increased by from 3 to 8°C as compared with the case wherein the organic solvent solution of the isophthalic acid dichloride and/or terephthalic acid dichloride is added to the aqueous alkaline solution of the mixture of phenolphthalein and the bisphenol.

The reaction system may be a batch system or a continuous system. However, the two phases are not compatible with each other, and accordingly it is necessary to disperse them as far as possible. When a homomixer is used, a polymer having a desired polymerization degree can relatively easily be obtained. However, it is difficult to obtain such a polymer by an ordinary agitation tank, i.e. it is rather difficult to bring the reduced viscosity $\eta sp/C$ to a level of 0.7 dℓ/g as measured at 30°C at a concentration of 1.0 g/dℓ in a solution of a mixture of phenol and tetrachloroethane in a weight ratio of 1 : 1.

It is a feature of the process of the present invention to use at least one of the compound represented by the above-mentioned formulas II, III, IV, V and VI as the catalyst, whereby a polymer having a high degree of polymerization can be produced in a agitation tank, and whereby it is possible to readily obtain a polymer having a reduced viscosity $\eta sp/C$ of 1.0 dℓ/g or higher.

In the general formula II, each of $R^9$ to $R^{13}$ is preferably a hydrogen atom or an alkyl group having from 1 to 25 carbon atoms, and it is particularly preferred that the total carbon number of $R^9$ to $R^{13}$ is from 8 to 40. Likewise, each of $R^{17}$ to $R^{20}$ is preferably a hydrogen atom or an alkyl group having from 1 to 25 carbon atoms, and the total carbon number is preferably from 8 to 40. Each of $R^{14}$ to $R^{16}$ is preferably an alkyl group having from 1 to 8 carbon

atoms, and each of $R^{21}$ to $R^{26}$ is preferably an alkyl group having from 1 to 25 carbon atoms, especially from 1 to 8 carbon atoms. Each of $R^{30}$ to $R^{34}$ is preferably a hydrogen atom or an alkyl group having from 1 to 15 carbon atoms. $R^{35}$ is preferably a phenyl group, a benzyl group or an alkyl group having from 1 to 25 carbon atoms.

Each of X, Y and Z may be a chlorine atom, a bromine atom, a fluorine atom, an iodine atom or a hydroxyl group.

Specific examples of the compound represented by the general formula II include 2-methyl-5-laurylbenzyltrimethyl ammonium chloride, 2-ethyl-5-stearylbenzyltrimethyl ammonium bromide, 2-methyl-5-cetyl benzyltriethyl ammonium chloride, 5-stearylbenzyltrimethyl ammonium hydroxide and 2-methy-5-octylbenzyltribuyl ammonium chloride. However, the compound of the general formula II is not restricted to these specific examples.

Specific examples of the compound represented by the general formula III include 2-methy-5-lauryl-1,3-xylylenebistrimethyl ammonium chloride, 5-stearyl-1,3-xylylenebistriethyl ammonium chloride, 2-methyl-5-cetyl-1,3-xylylenebistripropyl ammonium hydroxide, and 2-octyl-1,4-xylylenebistriethyl ammonium hydroxide. However, the compound of the general formula III is not restricted to these specific examples.

Specific examples of the compound represented by the general formula IV include benzyl tri-n-butyl ammonium chloride, benzyl tri-n-propyl ammonium bromide, benzyl tri-n-hexyl ammonium chloride, benzyl tri-iso-propyl ammonium chloride, benzyl tri-n-octyl ammonium chloride, benzyl di-n-octyl-n-propyl ammonium chloride, benzyl-n-hexyl dimethyl ammonium chloride, benzyl-n-butyldiethyl ammonium chloride, benzyl-n-octyldimethyl ammonium bromide, and benzyl lauryl dimethyl ammonium chloride. However, the compound of the general

BAD ORIGINAL

formula IV is not restricted to these specific examples.

Specific examples of the compound represented by the general formula V include triphenyl methylphosphonium iodide, triphenylbenzylphosphonium chloride, triphenyl-n-butylphosphonium bromide, tetraphenylphosphonium bromide, trinonylphenyl methylphosphonium iodide, triphenyl stearylphosphonium bromide or triphenyl-n-octyl phosphonium hydroxide. However, the compound of the general formula V is not restricted to these specific examples.

Specific examples of the compound represented by the general formula VI include tetra-n-butyl ammonium bromide, tetra-n-propyl ammonium chloride, tetra-n-pentyl ammonium chloride, tetra-n-hexyl ammonium chloride, tetra-hexyl ammonium bromide, tetra-n-octyl ammonium chloride, tetra-2-ethylhexyl ammonium chloride and tetra-isopropyl ammonium bromide. However, the compound of the general formula VI is not restricted to these specific examples.

These compounds of the general formulas II, III, IV, V and VI may respectively be used alone or in combination as a mixture of optional proportions.

The amount of the catalyst used for polymerization is usually from 0.0001 to 20 parts by weight, preferably from 0.005 to 5 parts by weight, per 100 parts by weight of the resulting polymer (as the reaction proceeds 100%).

For the polycondensation reaction, an anti-oxidant such as hydrosulfite may be used.

The stirring vanes for the agitation tank may be of any type such as a Pfaudler type, a turbine type, a flat plate type or a screw type. However, the Pfaudler type or the turbine type are preferably used. Needless to say, it is preferred to use a baffle plate to

improve the agitation, as the case requires.

The polymerization may be conducted under elevated pressure in the agitation tank. The polymerization temperature is usually selected within a range of from -5 to 50°C. Subsequent to the polymerization reaction, the aqueous phase containing an alkali metal chloride is separated from the organic solvent phase in which the aromatic polyester copolymer is dissolved. This separation may be conducted by a standstill separation or a mechanical separation by means of e.g. a centrifugal separator. If necessary, the polymer layer is subsequently washed with e.g. alkaline water, acidic water or neural water. For the isolation of the polymer from the organic solvent solution, any conventional method for isolation may be used. If necessary, the polymer is further washed with an organic solvent such as methanol, ethanol, acetone, hexane or xylene.

The organic polyester copolymer obtained by the present invention has various advantageous. Namely, it has superior mechanical properties such as tensile strength, bending strength, tensile modulus of elasticity or flexaral modulus as well as superior heat reistance, thermal decomposition initiation temperature, electric properties and dimentional stability, and it has a low moisture or water absorption rate and is transparent.

Now, the present invention will be described in further detail with reference to Examples.

EXAMPLE 1:

In a 15 ℓ agitation tank equipped with Pfaudler type stirring vanes and a baffle, an aqueous alkaline solution comprising 3000 g of water, 5.04 g of sodium hydroxide and 0.132 g of sodium hydrosulfite was prepared, and 19.1 g of phenolphthalein was dissolved therein

and then 0.2 g of benzyltributyl ammonium chloride was added thereto. Separately, an aqueous alkaline solution comprising 1000 g of water, 20.16 g of sodium hydroxide and 0.528 g of sodium hydrosulfite was prepared and 54.8 g of 2,2-bis(4-hydroxyphenyl)-propane was dissolved therein, and a solution containing 59.6 g of isophthalic acid dichloride in 2700 g of methylene chloride was prepared.

These solutions were preliminarily adjusted to from 1 to 2°C, and while vigorously agitating the above-mentioned aqueous solution of phenylphthalein at a agitation speed of 320 r.p.m., the above-mentioned methylene chloride solution of isophthalic acid dichloride was rapidly added. Then, the aqueous alkaline solution of 2,2-bis (4-hydroxyphenyl)propane was rapidly added. The stirring was continued at 2°C for 2 hours. The stirring was discontinued and the system was left to stand still, whereupon the methylene chloride phase and the aqueous phase are separated. After removing the aqueous phase, the methylene chloride phase was added to methanol, whereby the polymer was precipitated. The polymer thus obtained was washed 3 times with boiling water, and then dried at 120°C.

This polymer had a reduced viscosity $\eta sp/C$ of 1.19 dℓ/g as measured at 30°C at a concentration of 1.0 g/dℓ in a solution of a mixture of phenol and tetrachloroethane (1 : 1).

This polymer was pressed at 280°C, whereby a transparent strong pressed piece was obtained. By means of a parallel plate plastometer manufactured by Toyo Seiki, the test piece was heated under a load of 20 kg/cm$^2$ at a rate of 2.5°C/min., and the temperature (hereinafter referred to as HDT*) at which the piece started to undergo abrupt deformation, was measured. The HDT* of the test piece was 206.0°C, and $\eta sp/C$ of the test piece was 1.21 dℓ/g.

EXAMPLE 2:

The preparation and reaction were conducted in the same manner as in Example 1 except that the methylene chloride solution of isophthalic acid dichloride and the aqueous alkaline solution of 2,2-bis(4-hydroxylphenyl)propane were simultaneously added to the aqueous alkaline solution of phenolphthalein. The polymer thus obtained had $\eta sp/C$ of 1.18 $d\ell/g$ and HDT* of 204.5°C, and the test piece thereof had $\eta sp/C$ of 1.06 $d\ell/g$.

EXAMPLES 3 to 10:

The preparation and reaction were conducted in the same manner as in Example 1 except that the amounts of the 2,2-bis(4-hydroxylphenyl)propane and phenolphthalein, the amounts of isophthalic acid dichloride and terephthalic acid dichloride, and the catalyst were changed as shown in Table 1. The results thereby obtained are shown in Table 1.

Table 1

| Exp. | 2,2-bis(4-hydroxy-phenyl) propane (g) | Phenol-phthalein (g) | Isophthalic acid dichloride (g) | Terephthalic acid dichloride (g) | Catalysts (parts by weight) | ηsp/C dℓ/g |
|---|---|---|---|---|---|---|
| 3 | 54.8 | 19.1 | 59.6 | 0 | 2-methyl-5-lauryl-benzyl ammonium chloride 0.2 | 1.25 |
| 4 | 54.8 | 19.1 | 59.6 | 0 | Triphenylmethyl phosphonium ammonium chloride 0.2 | 1.20 |
| 5 | 54.8 | 19.1 | 59.6 | 0 | Tetra-n-butyl ammonium bromide 0.2 | 1.12 |
| 6 | 47.9 | 28.6 | 47.7 | 11.9 | 2-methyl-5-lauryl-1,3-xylylene bistrimethyl ammonium chloride 0.2 | 1.13 |
| 7 | 47.9 | 28.6 | 47.7 | 11.9 | Benzyl-tri-n-propyl ammonium chloride 0.2 | 1.07 |
| 8 | 54.8 | 19.1 | 11.9 | 47.7 | Benzyl-n-propyl ammonium bromide 0.2 | 1.13 |
| 9 | 54.8 | 19.1 | 11.9 | 47.7 | Triphenyl benzylphosphonium chloride 0.2 | 1.25 |
| 10 | 41.0 | 38.2 | 0 | 59.6 | Tetra-n-propyl ammonium chloride 0.2 | 1.31 |

EXAMPLE 11:

In a 1 ℓ agitation tank equipped with Pfaudler type stirring vanes and a baffle, an aqueous alkaline solution comprising 400 g of water, 2.52 g of sodium hydroxide and 0.066 g of sodium hydrosulfite was prepared, and 5.48 g of 2,2-bis(4-hydroxyphenyl)propane was dissolved therein. Then, 1.91 g of phenolphthalein was dissolved therein and subsequently 0.10 g of 2-methyl-5-laurylbenzyltrimethyl ammonium chloride was added. Separately, a solution containing 5.96 g of isophthalic acid dichloride in 270 g of methylene chloride was prepared.

These solutions were preliminarily adjusted to from 1 to 2°C, and while vigorously agitating the above-mentioned aqueous alkaline solution of a mixture of 2,2-bis(4-hydroxyphenyl)propane and phenolphthalein at a agitation speed of 800 r.p.m., the above-mentioned methylene chloride solution of isophthalic acid dichloride was rapidly added. The agitation was continued at 2°C for 2 hours.

The agitation was discontinued and the system was left to stand still, whereupon the methylene chloride phase and the aqueous phase were separated. After removing the aqueous phase, the methylene chloride phase was added to 500 mℓ of ethanol, whereby the polymer was precipitated. The polymer thus obtained was washed three times with 500 mℓ of boiling water, and then dried at 120°C.

This polymer had ηsp/C of 1.22 dℓ/g as measured at 30°C at a concentration of 1.0 g/dℓ in a solution of a mixture of phenol and tetrachloroethane (1 : 1).

This polymer was pressed at 280°C, whereby a transparent strong pressed piece was obtained. By means of a parallel plate plastmeter manufactured by Toyo Seiki, the test piece was heated

under a load of 20 kg/cm² at a rate of 2.5°C/min., and the temperature (HDT*) at which the test piece started to undergo abrupt deformation was measured. The HDT* of the test piece was 203°C, and the test piece had ηsp/C of 1.20 dℓ/g.

EXAMPLES 12 to 15:

The preparation and the polymerization were conducted in the same manner as in Example 11 except that the catalyst 2-methyl-5-laurylbenzylmethyl ammonium chloride was changed as shown in Table 2. The results thereby obtained are shown in Table 2.

Table 2

| Examples | Catalysts | Polymer ηsp/C dℓ/g | HDT °C | Test piece ηsp/C dℓ/g |
|---|---|---|---|---|
| 12 | 2-methyl-5-lauryl-1,3-xylylene bis-trimethyl ammonium chloride | 1.19 | 201.0 | 1.03 |
| 13 | Benzyl-n-butyl ammonium chloride | 1.37 | 201.0 | 0.95 |
| 14 | Triphenylmethylphosphonium iodide | 1.26 | 201.5 | 1.15 |
| 15 | Tetra-n-butyl ammonium bromide | 1.23 | 201.0 | 0.92 |

EXAMPLE 16:

The preparation and reaction were conducted in the same manner as in Example 1 except that a 100 ℓ agitation tank was used, an aqueous alkaline phenolphthalein solution comprising 30 kg of water, 50.4 g of sodium hydroxide, 1.32 g of sodium hydrosulfite, 2.0 g of benzyltributyl ammonium chloride and 191 g of phenolphthalein was prepared and used, an aqueous alkaline 2,2-bis(4-hydroxyphenyl) propane solution comprising 10 kg of water, 201.6 g of sodium

hydroxide, 5.28 g of sodium hydrosulfite, 4.5 g of p-tert-butylphenol and 548 g of 2,2-bis(4-hydroxyphenyl)propane, was prepared and used and a methylene chloride solution of isophthalic acid chloride comprising 27 kg of methylene chloride and 596 g of isophthalic acid dichloride, was prepared and used. The polymer thereby obtained had ηsp/C of 0.85. This polymer was pelletized at 330°C, whereby a polymer having ηsp/C of 0.82 was obtained. The melting viscosity of these pellets were measured at 300°C at 100 $sec^{-1}$ by means of "KOKA" type flow tester(Shimazu Seisakusyo Ltd.) and found to be 1.0 x $10^5$ poise. This polymer was further subjected to injection molding by means of a 2.5 DZ injection molding machine manufactured by Toshiba Kikai K.K., and the physical properties of the molded product were measured. The results thereby obtained are shown in Table 3.

Table 3

| | |
|---|---|
| Tensile strength (yield) ($kg/cm^2$) (D-63*0 | 766 |
| Elongation at break (%) (D-638) | 81 |
| Flexaral modulus ($kg/cm^2$) (D-790) | 19700 |
| Izod impact strength kg·cm/cm (1/8" notch) (D-256) | 22.5 |
| Heat distorsion temperature (°C) (18.6 $kg/cm^2$, D-648) | 186 |
| Non-flammability test (UL-94 1/8") | V-O |

COMPARATIVE EXAMPLE 1:

The preparation and reaction were conducted in the same manner as in Example 1 except that benzyltrimethyl ammonium chloride was used instead of benzyltri-n-butyl ammonium chloride. The polymer thereby obtained had $\eta sp/C$ of 0.47 dℓ/g. A press-molded product thereof was very brittle.

COMPARATIVE EXAMPLE 2:

The preparation and reaction were conducted in the same manner as in Example 1 except that benzyltriethyl ammonium chloride was used instead of benzyltri-n-butyl ammonium chloride. The polymer thereby obtained had $\eta sp/C$ of 0.45 dℓ/g.

COMPARATIVE EXAMPLE 3:

The preparation and reaction were conducted in the same manner as in Example 1 except that lauryltrimethyl ammonium chloride was used instead of benzyltri-n-butyl ammonium chloride. The polymer thereby obtained had $\eta sp/C$ of 0.48 dℓ/g.

CLAIMS:

1. In a process for producing an aromatic polyester by an interfacial polycondensation reaction in which an aqueous alkaline solution containing a bisphenol represented by the general formula

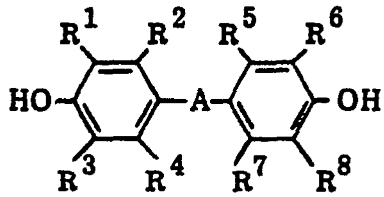

(I)

where A is an oxygen atom, a sulfur atom, a sulfonyl group, a carbonyl group, an alkylene group or an alkylidene group, and each of $R^1$, $R^2$, $R^3$, $R^4$, $R^5$, $R^6$, $R^7$ and $R^8$ is a hydrogen atom, a halogen atom or a hydrocarbon group, and phenolphthalein in a molar ratio of the former to the latter of from 10 : 90 to 97 : 3, is catalytically reacted with an organic solvent solution of isophthalic acid dichloride and/or terephthalic acid dichloride, an improvement wherein at least one compound selected from the group consisting of the following (a), (b), (c), (d) and (e) is used as the catalyst:

(a) a compound represented by the general formula

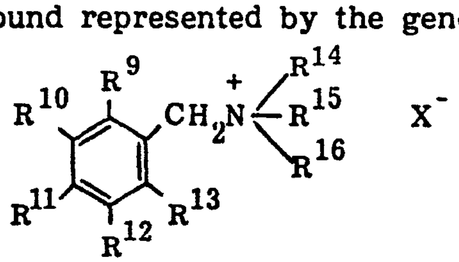

(II)

where each of $R^9$, $R^{10}$, $R^{11}$, $R^{12}$ and $R^{13}$ is a hydrogen atom or an alkyl group, at least one of $R^9$, $R^{10}$, $R^{11}$, $R^{12}$ and $R^{13}$ is an alkyl group, each of $R^{14}$, $R^{15}$ and $R^{16}$ is an alkyl group having at most 12 carbon atoms, and X is a hydroxyl group or an halogen atom,

(b) a compound represented by the general formula

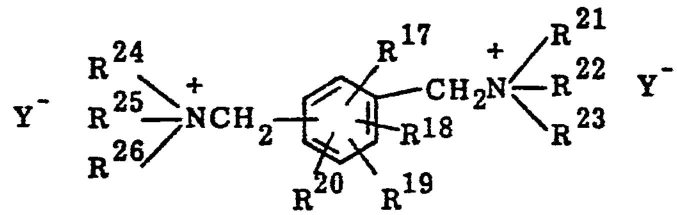 (III)

where each of $R^{17}$, $R^{18}$, $R^{19}$ and $R^{20}$ is a hydrogen atom or an alkyl group, each of $R^{21}$, $R^{22}$, $R^{23}$, $R^{24}$, $R^{25}$ and $R^{26}$ is an alkyl group, and Y is a hydroxyl group or a halogen atom,

(c) a compound represented by the general formula

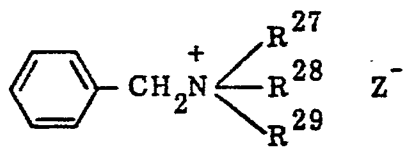 (IV)

where $R^{27}$ is an alkyl group having from 3 to 12 carbon atoms, each of $R^{28}$ and $R^{29}$ is an alkyl group having from 1 to 12 carbon atoms, provided the total number of carbon atoms of $R^{27}$, $R^{28}$ and $R^{29}$ is from 7 to 36, and Z is a hydroxyl group or a halogen atom,

(d) a compound represented by the general formula

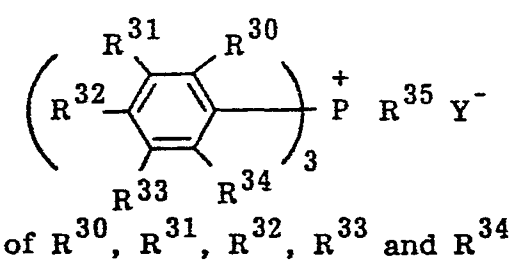 (V)

where each of $R^{30}$, $R^{31}$, $R^{32}$, $R^{33}$ and $R^{34}$ is a hydrogen atom or an alkyl group, $R^{35}$ is an alkyl group, an aryl group or an aralkyl group, and Y is a halogen atom or a hydroxyl group, and

(e) a compound represented by the general formula

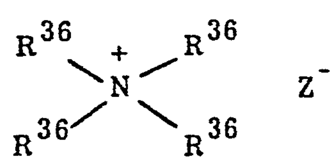 (VI)

where $R^{36}$ is an alkyl group having from 3 to 8 carbon atoms, and Z is a hydroxyl group or a halogen atom.

2. The process according to Claim 1 wherein the polycondensation reaction is conducted in an agitation tank.

3. A process according to Claim 1 wherein the aqueous alkaline solution containing the bisphenol and phenolphthalein is prepared either by firstly dissolving the bisphenol in an aqueous alkaline solution and then adding and dissolving phenolphthalein, or by separately preparing an aqueous alkaline solution of phenolphthalein and an aqueous alkaline solution of the bisphenol and then mixing the solutions, and at that time, an alkali is used in an amount of from 2 to 2.5 times the total amount of the bisphenol and phenolphthalein by molar ratio.

4. The process according to Claim 1 wherein the polycondensation reaction is conducted either by adding the organic solvent solution of isophthalic acid dichloride and/or terephthalic acid dichloride to an aqueous alkaline solution of phenolphthalein and then adding an aqueous alkaline solution of the bisphenol, or by simultaneously adding the organic solvent solution of isophthalic acid dichloride and/or terephthalic acid dichloride and an aqueous alkaline solution of the bisphenol to an aqueous alkaline solution of phenolphthalein.

5. The process according to Claim 1 wherein 2,2-bis(4-hydroxyphenyl)propane is used as the bisphenol.

6. The process according to Claim 1 wherein the catalyst is used in an amount of from 0.001 to 20 parts by weight per 100 parts by weight of the resulting polymer (as the reaction proceeds 100%).

7. The process according to Claim 1 wherein the polycondensation temperature is from -5 to 50°C.

BAD ORIGINAL